(19) **Europäisches Patentamt**

**European Patent Office**

**Office européen des brevets**

(11) Veröffentlichungsnummer: **0 509 394 B1**

(12) # EUROPÄISCHE PATENTSCHRIFT

(45) Veröffentlichungstag der Patentschrift: **22.02.95**

(51) Int. Cl.⁶: **B64G 1/58**, F41G 7/22

(21) Anmeldenummer: **92106151.1**

(22) Anmeldetag: **09.04.92**

(54) **Suchkopfabdeckung für Lenkflugkörper.**

(30) Priorität: **13.04.91 DE 4112140**

(43) Veröffentlichungstag der Anmeldung:
**21.10.92 Patentblatt 92/43**

(45) Bekanntmachung des Hinweises auf die Patenterteilung:
**22.02.95 Patentblatt 95/08**

(84) Benannte Vertragsstaaten:
**DE FR GB**

(56) Entgegenhaltungen:
**EP-A- 0 412 411**
**US-A- 3 062 148**
**US-A- 3 111 088**
**US-A- 3 372 556**
**US-A- 4 717 822**

(73) Patentinhaber: **Bodenseewerk Gerätetechnik GmbH**
**Alte Nussdorfer Strasse 15**
**Postfach 1120**
**D-88662 Überlingen (DE)**

(72) Erfinder: **Uwira, Bernd, Dr.**
**Haltnauerweg 5**
**W-7750 Konstanz (DE)**
Erfinder: **Hingst, Uwe, Dr.**
**Rebenstrasse 18**
**W-7991 Oberteuringen (DE)**
Erfinder: **Paulus, Wolf-Dieter**
**Höriweg 3**
**W-7772 Oberuhldingen (DE)**

(74) Vertreter: **Wolgast, Rudolf, Dipl.-Chem. Dr. et al**
**Dipl.-Phys. Jürgen Weisse**
**Dipl.-Chem. Dr. Rudolf Wolgast**
**Bökenbusch 41**
**Postfach 11 03 86**
**D-42531 Velbert (DE)**

Rank Xerox (UK) Business Services
(3.10/3.09/3.3.3)

## Beschreibung

Die Erfindung betrifft einen Lenkflugkörper, insbesondere Hochgeschwindigkeits-Lenkflugkörper mit einem Suchkopf, der durch eine Suchkopfabdeckung abgedeckt ist.

Hochgeschwindigkeits-Lenkflugkörper im Geschwindigkeitsbereich über 3 Mach werden für Anwendungen benötigt, die extrem kurze Reaktionszeiten erfordern. Insbesondere werden solche Hochgeschwindigkeits-Flugkörper zur Bekämpfung sehr schnell beweglicher Ziele, wie ballistischer Raketen, oder sehr wendiger Ziele benötigt. Für solche Hochgeschwindigkeits-Lenkflugkörper werden vorzugsweise IIR-Sucher verwendet, also Infrarotsucher, bei denen eine Abbildung des Gesichtsfeldes erfolgt. Solche Sucher eignen sich für diese Aufgabenstellung besonders gut wegen der dabei möglichen Bildverarbeitung und der Präzision in der Endphasenlenkung.

Bei solchen Hochgeschwindigkeits-Lenkflugkörpern ergeben sich jedoch Probleme.

Durch die hohe Geschwindigkeit tritt eine starke aerodynamische Aufheizung des Hochgeschwindigkeits-Lenkflugkörpers auf. Insbesondere wird auch der Dom aufgeheizt, also die strahlungsdurchlässige Abdeckung des Suchkopfs, welche üblicherweise die Spitze des Hochgeschwindigkeits-Lenkflugkörpers bildet. Durch diese aerodynamische Aufheizung des Domes entstehen innerhalb weniger Sekunden sehr hohe Temperaturen, die zur Zerstörung des Domes führen können. Auch die mechanische Beanspruchung ist sehr hoch und kann zum Bruch des Domes führen.

Durch die Aufheizung emittiert der Dom selbst Infrarotstrahlung. Diese Emission des Domes auch in Richtung auf den Suchkopf hin bringt Signalverluste und Rauscherhöhung. Bei den hohen Temperaturen verschlechtert sich die Transmission des Domes. Der Dom ist sehr starker Erosion ausgesetzt, wenn der Hochgeschwindigkeits-Lenkflugkörper durch Regen fliegt (Regenerosion).

Es sind verschiedene Versuche gemacht worden, um diese Probleme zu lösen.

Es sind statt des Domes seitlich liegende, infrarotdurchlässige Fenster mit sehr flachem Anstellwinkel von etwa 20° vorgesehen worden. Solche Fenster widerstehen in vielen Anwendungsfällen der mechanischen Beanspruchung. Bei Geschwindigkeiten über 3 Mach wird jedoch auch hier keine Regenerosionsfestigkeit erreicht. Insbesondere platzt die Vergütung auf der Außenseite des Fensters von dem das Fenster bildenden Substrat ab. Wegen des flachen Einfallswinkels ist jedoch das Fenster ohne Vergütung unbrauchbar.

Es ist versucht worden, ein solches Fenster auf der Aussenseite mit einem flüssigen Kühlmittel zu kühlen. Ein solches flüssiges Kühlmittel auf der Aussenseite des Fensters verursacht jedoch starke optische Störungen. Daher ist auch dieses Verfahren ungeeignet. Ausserdem wird wegen der starken aerodynamischen Strömung eine grosse Menge an Kühlmittel verbraucht.

Es ist weiterhin versucht worden, das Fenster mit Kanälen zu versehen, durch welche ein Kühlmittel geleitet wird. Das ist sehr aufwendig. Ausserdem treten insbesondere in Boresight-Richtung unakzeptable optische Verluste auf.

Die US-A-4 717 822 beschreibt einen Sensor für Aufklärungszwecke, bei welchem ein Strahlengang durch zwei rotierende Kardanrahmen mit Spiegeln so abgelenkt wird, dass er ein Rosettenmuster beschreibt. Der Strahlengang geht dabei durch ein seitliches Fenster in der Spitze eines Flugzeugs hindurch.

Aus der US-A-3 062 148 ist ein Raumfahrzeug bekannt, bei welchem die Spitze der Zelle von einer Kugel gebildet ist. Die Kugel ist um eine quer zur Flugrichtung verlaufende Achse antreibbar und kann auf der Innenseite mit Druckwasser besprüht werden. Durch das Verdampfen des Wassers wird die beim Wiedereintritt in die Erdatmosphäre stark erhitzte Kugel gekühlt.

Der Erfindung liegt die Aufgabe zugrunde, eine auch bei hohen Geschwindigkeiten brauchbare Suchkopfabdeckung für Lenkflugkörper zu schaffen.

Erfindungsgemäss wird diese Aufgabe bei einem Lenkflugkörper der eingangs genannten Art dadurch gelöst, dass

(a) der Suchkopf von einem drehbar gelagerten und antreibbaren Dom abgedeckt ist und

(b) der Dom von der Struktur des Lenkflugkörpers in Umfangsrichtung bis auf einen seitlichen Fensterausschnitt umgeben ist.

Nach der Erfindung ist somit der Dom mit Ausnahme eines Fensterausschnittes von der Struktur des Lenkflugkörpers abgedeckt. Der Dom ist drehbar und wird angetrieben. Infolgedessen ist jeder Teil des Domes nur während eines Teils der Flugzeit des Hochgeschwindigkeits-Lenkflugkörpers den aerodynamischen Belastungen ausgesetzt. Während des überwiegenden Teils der Flugzeit ist jeder Abschnitt des Domes von der Struktur abgedeckt und geschützt. Damit ist die Dauer der thermischen Belastung jedes Teiles des Domes entsprechend vermindert.

Vorteilhafterweise ist in einen zwischen Dom und Struktur des Lenkflugkörpers gebildeten Zwischenraum ein Kühlmittel einleitbar. Dann werden die jeweils nicht vor dem Fenster befindlichen Teile des Domes durch das Kühlmittel gekühlt. Die Temperatur des Domes kann dadurch erheblich reduziert werden. Die vor dem Fenster befindlichen Teile sind keinem Kühlmittel ausgesetzt. Dadurch wird die Transmission des Domes in diesem Bereich nicht durch Kühlmittel beeinträchtigt. Das Kühlmittel ist nicht der starken aerodynamischen Strömung ausgesetzt, die an der Oberfläche des Lenkflugkörpers auftritt.

Der Zwischenraum kann auf einfache Weise dadurch gebildet sein, daß der Dom achssymmetrisch zu einer zu der Längsachse des Lenkflugkörpers parallelen aber zu dieser seitlich versetzten Achse ausgebildet und um diese Achse drehbar ist, wobei zwischen der Struktur des Flugkörpers und dem Dom der im Querschnitt mondsichelförmige Zwischenraum gebildet ist.

Vorteilhafterweise bildet der Dom eine mehrseitige Pyramide, welche von planparallelen Facetten gebildet ist. Das hat den Vorteil, daß der Dom die Abbildung des Gesichtsfeldes durch ein optisches System des Suchkopfs nicht beeinflußt. Jede der Facetten stellt eine planparallele Platte dar, die, wenn das Objekt praktisch im Unendlichen liegt, von parallelen Lichtbündeln durchsetzt wird.

Die Struktur des Lenkflugkörpers kann eine wärmeisolierende Schicht aufweisen, welche den Zwischenraum gegen die Außenhaut des Lenkflugkörpers thermisch isoliert. Dadurch kann der Kühlmittelverbrauch gesenkt werden.

Eine vorteilhafte Konstruktion besteht darin, daß die Struktur des Lenkflugkörpers eine Spitze bildet und der Dom einerseits mit seinem geschlossenen Ende in der Spitze und andererseits mit seinem Rand in der Struktur des Lenkflugkörpers drehbar gelagert ist. In der Spitze können Kühlmittelauslässe gebildet sein, die in den Zwischenraum münden.

Eine besonders vorteilhafte Ausbildung eines zur Kühlung des Domes benutzten Verdampfungskühlers ist Gegenstand der Ansprüche 9 bis 23.

Ein Ausführungsbeispiel der Erfindung ist nachstehend unter Bezugnahme auf die zugehörigen Zeichnungen näher erläutert.

Fig.1 zeigt eine Seitenansicht des Vorderteils eines Hochgeschwindigkeits-Lenkflugkörpers mit einer Suchkopfabdeckung.

Fig.2 zeigt einen Längsschnitt durch den Vorderteil des Hochgeschwindigkeits-Lenkflugkörpers.

Fig.3 zeigt einen Schnitt längs der Linie A - A von Fig.2 von rechts in Fig.2 betrachtet.

Fig.4 zeigt einen Schnitt längs der Linie B - B von Fig.2 von links in Fig.2 betrachtet.

Fig.5 zeigt einen Längsschnitt ähnlich Fig.2 durch den Vorderteil einer anderen, bevorzugten, Ausführung eines Hochgeschwindigkeits-Lenkflugkörpers.

Fig.6 zeigt in vergrößertem Maßstab ein Detail "A" von Fig.5, nämlich den Aufbau des Verdampfungskühlers.

Fig.7 zeigt in vergrößertem Maßstab ein Detail "B" von Fig.6, nämlich den Wärmepfad zwischen Verdampfungskühler und Struktur des Flugkörpers.

Fig.8 ist eine schematische Darstellung des Verdampfungskühlers mit der Lochplatte.

Fig.9 zeigt eine andere Ausführung eines Tanks für das Kühlmittel.

Fig.10 zeigt die Anordnung des Tanks von Fig.9 in einem Flugkörper.

Fig.11 ist eine Vorderansicht des Flugkörpers.

Fig.12 ist eine perspektivische Darstellung der Spitze des Flugkörpers.

Fig.13 ist eine perspektivische Darstellung der Facetten des im Querschnitt sechseckigen Domes bei der Suchkopfabdeckung von Fig.11 und 12.

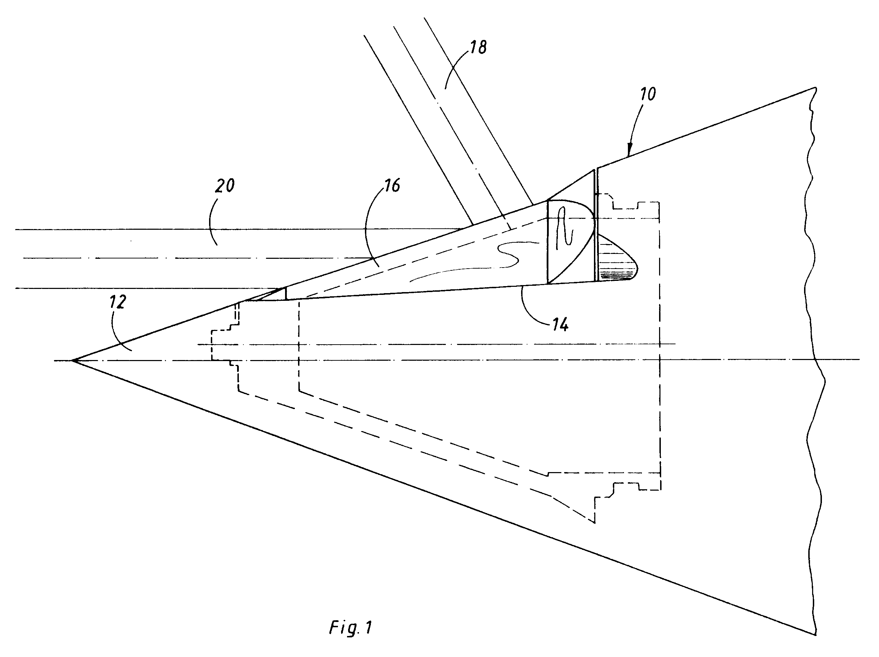

In Fig.1 ist mit 10 die Struktur im Vorderteil eines Hochgeschwindigkeits-Lenkflugkörpers bezeichnet. Der Hochgeschwindigkeits-Lenkflugkörper fliegt mit einer Geschwindigkeit von mehr als drei Mach. Der Vorderteil ist im wesentlichen konisch mit einer konischen Spitze 12. Die Struktur 10 im Vorderteil des Hochgeschwindigkeits- Lenkflugkörpers weist einen seitlichen Fensterausschnitt 14 auf. Der Fensterauschnitt 14 ist in noch zu beschreibender Weise durch einen rotierenden, für Infrarotstrahlung durchlässigen Dom 16 abgeschlossen. Ein Suchkopf tastet durch den Fensterausschnitt 14 und den Dom 16 hindurch ein im wesentlichen im Unendlichen liegendes Gesichtsfeld ab, wie durch die parallelen Strahlenbündel 18 und 20 angedeutet ist.

In dem Vorderteil des Hochgeschwindigkeits-Lenkflugkörpers sitzt der Suchkopf, der generell mit 22 bezeichnet ist. Der Suchkopf 22 ist ein abbildender Infrarotsuchkopf und bewirkt eine Abtastung des Gesichtsfeldes mittels eines optischen Systems und eines Multielementdetektors. Der Aufbau eines solchen Suchkopfes ist an sich bekannt und nicht Gegenstand der vorliegenden Erfindung. Daher ist der Suchkopf 22 hier nicht im einzelnen beschrieben. Der Suchkopf 22 sitzt in einem hermetisch abgeschlossenen Gehäuse 24. Das Gehäuse ist durch ein für infrarote Strahlung durchlässiges, seitliches Fenster 26 hermetisch abgeschlossen. Das Fenster 26 sitzt im Bereich des Fensterausschnitts 14 (Fig.1).

Der Suchkopf 22 mit dem Gehäuse 24 und dem Fenster 26 ist seinerseits durch einen Dom 28 abgedeckt. Der Dom 28 besteht ebenfalls aus infrarotdurchlässigem Material. Der Dom 28 hat die Grundform einer mehrseitigen Pyramide, die bei der dargestellten Ausführung regelmäßig achteckigen Querschnitt hat. Die einzelnen Facetten der Pyramide sind von planparallelen Platten 30 gebildet. Die Achse 32 des Domes 28 verläuft parallel aber seitlich versetzt zu der Längsachse 34 des Hochgeschwindigkeits-Lenkflugkörpers. Die Platten sind für infrarote Strahlung durchlässig. Der Dom ist in der Struktur 10 des Hochgeschwindigkeits-Lenkflugkörpers um seine Achse 32 drehbar gelagert. Die Platten, welche die Facetten der Pyramide bilden, sind am vorderen Ende in einem Kopfteil 36 gehalten. Der Kopfteil 36 weist einen Zapfen 38 auf, der gleichachsig zu der Achse 32 ist. Der Zapfen 38 ist über ein Kugellager 40 in der Spitze 12 der Struktur 10 drehbar gelagert. Am hinteren, weiteren Ende der Pyramide sind die Platten 30 mit einem Ring 42 verbunden. Der Ring 42 ist ebenfalls gleichachsig zu der Achse 32. Der Ring 42 ist über ein Kugellager 44 in der Struktur 10 gelagert. Der Dom 28 greift über das Gehäuse 24 des Suchkopfes 22 und über das Fenster 26. Dabei deckt der Dom auch den Fensterausschnitt 14 ab. Allerdings erfolgt keine Abdichtung zwischen dem Dom 28 und der Struktur 10 an den Rändern des Fensterausschnitts 16. Vielmehr bleibt der Dom 28 frei drehbar. Der Dom 28 wird durch einen (nicht dargestellten) Antrieb in Rotation um die Achse 32 versetzt.

Durch die außermittige Anordnung der Achse 32 in der Struktur 10 wird zwischen der Außenfläche des Domes 28 und der Struktur 10 ein im Querschnitt etwa mondsichelförmiger Zwischenraum 46 gebildet. Der Zwischenraum 46 ist von der Außenhaut 48 der Struktur 10 durch eine Schicht 50 aus wärmeisolierendem Material getrennt.

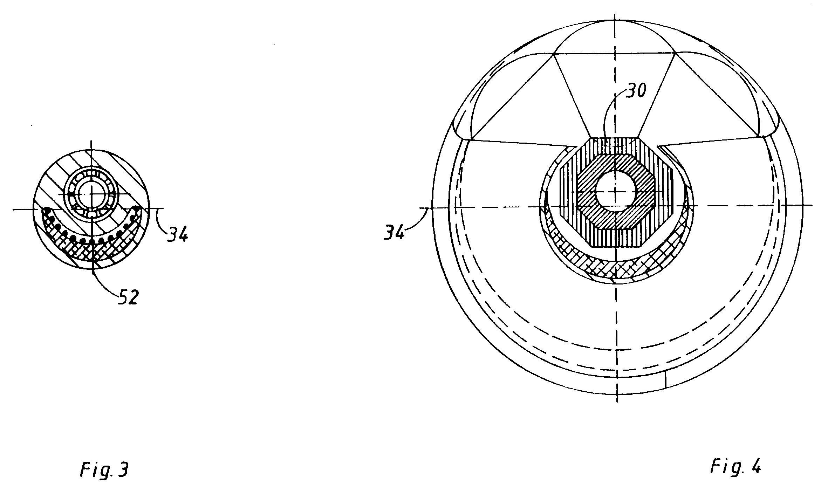

Wie aus Fig.3 am besten ersichtlich ist, wird in den Zwischenraum 46 von der Spitze 12 her über Kühlmittelauslässe 52 ein Kühlmittel eingeleitet. Als Kühlmittel kann flüssiger Stickstoff dienen, der verdampft und dann über den Spalt zwischen dem rotierenden Dom 28 und den Rändern des Fensterausschnitts 14 in die Atmosphäre austritt.

Jede Facette der Pyramide des Domes 28 wird bei dessen Umlauf während etwa 20%bis 25% der Zeit durch den Fensterausschnitt 14 hindurch der aerodynamischen Belastung ausgesetzt und erwärmt. Während der restlichen 80% bzw. 75% der Zeit ist jede Facette durch die Struktur abgedeckt und wird durch das Kühlmittel gekühlt.

Geht man davon aus, daß jede Facette maximal für eine Sekunde der aerodynamischen Belastung ausgesetzt werden darf, dann ergibt sich eine verfügbare Kühlzeit von etwa 3 bis 4 Sekunden pro Umdrehung des Domes 28. Es hat sich gezeigt, daß vergütete ZnS-Fenster, die im Wellenlängenbereich von 8 bis 12 $\mu$ durchlässig sind, innerhalb einer Sekunde bis auf etwa 700 K aufgeheizt werden dürfen, ohne daß Beschädigungen auftreten. Mit flüssigem Stickstoff als Kühlmittel kann die Temperatur der Facetten innerhalb einer Zeit von weniger als 4 Sekunden auf etwa 300 K abgekühlt werden. Wenn die Facette bei jeder Umdrehung für eine Sekunde der aerodynamischen Belastung im Bereich des Fensterausschnitts ausgesetzt ist, dann kann ein durchschnittlicher Temperaturgradient, also eine Erhitzung pro Sekunde, der jeweils exponierten Facetten von 400 K/s mit der beschriebenen Anordnung bewältigt werden.

Rechnungen mit ähnlichen Konfigurationen haben bei Mach 4 in Bodennähe Temperaturgradienten von etwa 100 K/s ergeben. Für vergleichbare Konfigurationen in 15 km Höhe bei Mach 6 ergaben sich 300 K/s. Solche Temperaturgradienten, also Aufheizgeschwindigkeiten, lassen sich mit der beschriebenen Lösung gut bewältigen. Bei noch höheren Temperaturgradienten ist die Eindringtiefe der aerodynamisch aufgeheizten Schicht in den IR-Dom geringer. Die Abkühlung durch das Kühlmittel kann dann entsprechend schneller erfolgen. Damit kann die Rotationsgeschwindigkeit des IR-Facettendomes erhöht werden.

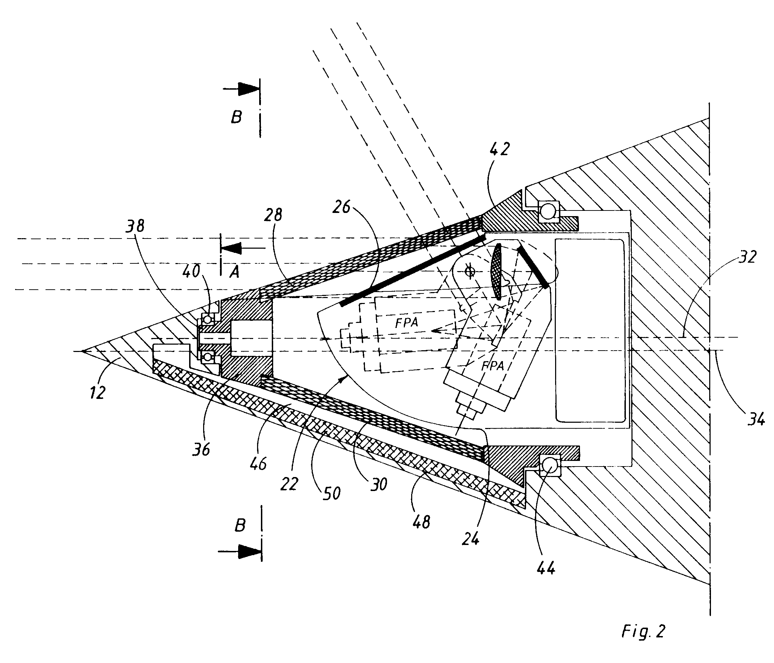

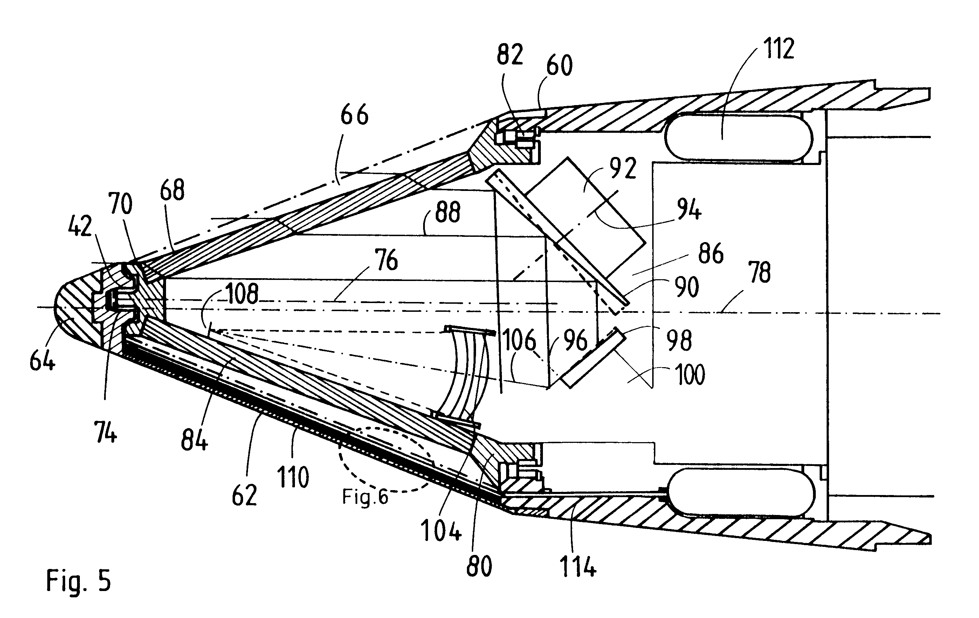

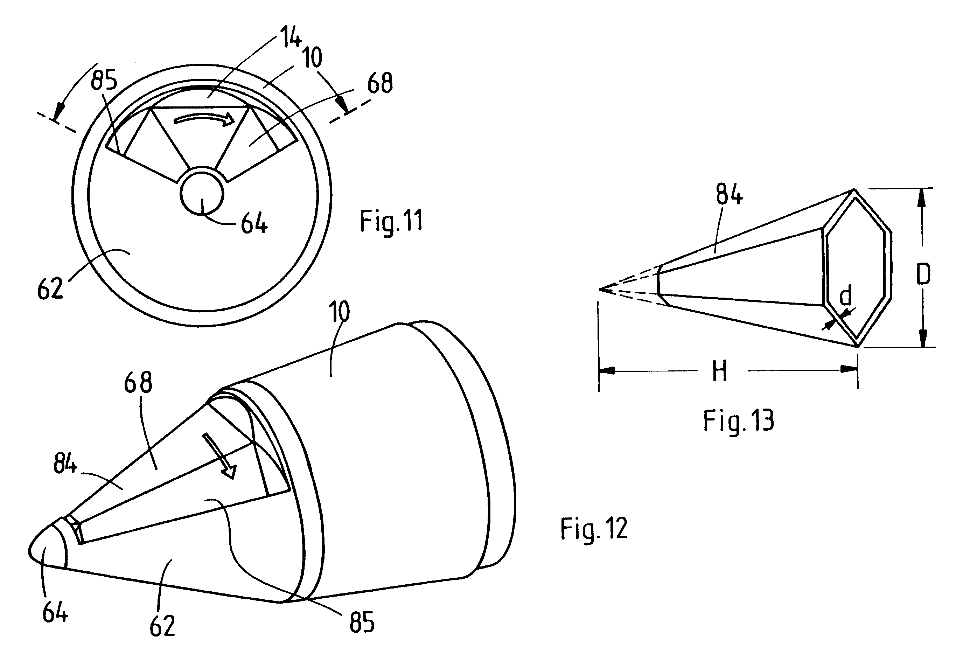

In Fig.5 ist in ähnlicher Darstellung wie in Fig.2 eine weitere -bevorzugte- Ausführungsform der Erfindung beschrieben. Mit 60 ist in Fig.5 generell die Zelle oder Struktur eines Flugkörpers bezeichnet. Ähnlich wie in Fig.1 und 2 bildet die Struktur 60 eine konische Spitze 62 mit einer Staupunktnase 64. In der Mantelfläche der Spitze 62 ist eine Fensteröffnung 66 gebildet. In der Spitze 62 sitzt ein drehbarer, infrarotdurchlässiger Dom 68. Der Dom 68 weist einen Kopfteil 70 auf. Der Kopfteil ist mit einem Zapfen 72 über ein Lager 74 in der Staupunktnase 64 drehbar gelagert. Die Drehachse 76 des Kopfteiles 70 verläuft parallel zu der Längsachse 78 des Flugkörpers, ist aber gegenüber dieser seitlich etwas versetzt. Weiterhin weist der Dom 68 einen Ring 80 auf. Der Ring 80 ist in der Zelle oder Struktur 60 des Flugkörpers am breiten Ende des Spitze 62 um die Drehachse 76 in einem Lager 82 drehbar gelagert. Zwischen dem Kopfteil 70 und dem Ring 80 erstrecken sich Facetten 84 des pyramidenförmigen Domes 68. Die Facetten sind wie bei der Ausführung nach Fig.1 und 2 planparallele Platten. Dadurch beeinflussen sie nicht die Abbildung des Gesichtsfeldes auf den Detektor des Suchkopfes. Zwischen den längsverlaufenden Rändern des Fensterausschnitts 66 und dem rotierenden Dom 68 sind Schlitze 85 gebildet (fig 11, 12).

Der Suchkopf ist in Fig.5 generell mit 86 bezeichnet. Der Strahlengang des Suchkopfes 86 enthält ein paralleles Lichtbündel 88, das parallel zu der Längsachse 78 des Flugkörpers durch den Fensterausschnitt 66 hindurch und durch den infrarotdurchlässigen Dom 68 einfällt. Das Lichtbündel 88 fällt auf einen ersten Taumelspiegel 90, der von einem Motor 92 um eine Achse 94 angetrieben wird. Das reflektierte Lichtbündel 96 fällt auf einen zweiten Taumelspiegel 98, der von einem Motor 100 um eine Achse 102 angetrieben wird. Durch ein Objektiv 104 wird das abgelenkte Lichtbündel 106 auf einem Detektor 108 gesammelt. Durch die beiden Taumelspiegel 90 und 98 wird das Gesichtsfeld in bekannter Weise längs einer Rosettenbahn abgetastet. Aus den Signalen des Detektors 108 und den zugehörigen Winkelstellungen der mit unterschiedlichen Drehzahlen umlaufenden Taumelspiegel 90 und 98 wird ein Gesichtsfeldbild in Form einer Pixelmatrix erzeugt, das in geeigneter Form verarbeitet werden kann. Das ist bekannte Technik und daher hier nicht im einzelnen beschrieben.

Der Dom 68 wird um die Achse 76 angetrieben. Es erscheinen daher die verschiedenen Facetten 84 des Domes 68 nacheinander für eine begrenzte Zeit in dem Fensterausschnitt 66. Nur während dieser begrenzten Zeit sind sie der Luftströmung und der aerokinetischen Aufheizung ausgesetzt. Während der restlichen Zeit ist jede der Facetten von der Struktur 60 abgedeckt. Dabei wird während dieser Zeit Jede Facette durch einen in der konischen Spitze 110 sitzenden Verdampfungskühler 110 gekühlt. Das Kühlmittel des Verdampfungskühlers 110 ist dabei in einem Tank 112 enthalten. Der Tank 112 ist torisch mit länglichem Querschnitt. Der Tank 112 ist koaxial zu der Längsachse 78 des Flugkörpers innerhalb des Mantels der Struktur 60 angeordnet. Damit unterstützt der Tank 112 die Stabilität der Struktur 60 des Flugkörpers. Der Tank 112 ist über eine Leitung 114 mit dem Verdampfungskühler 110 verbunden. Der Verdampfungskühler 110 sitzt in dem im Querschnitt mondsichelförmigen Raum, der zwischen der Struktur 10 und dem exzentrisch dazu angeordneten Dom gebildet wird.

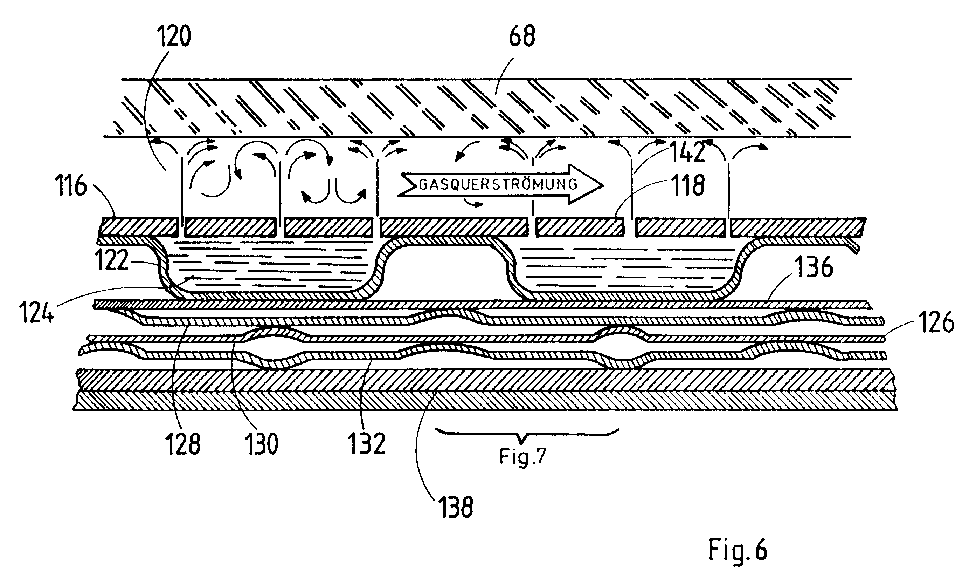

Wie aus Fig.6 ersichtlich ist, enthält der Verdampfungskühler 110 eine Lochplatte 116. Die Lochplatte 116 weist eine Vielzahl von Düsenöffnungen oder Löchern 118 auf. Die Lochplatte 116 greift in dem von der Spitze 62 abgedeckten Bereich um den Dom 68 herum. Die Lochplatte 116 liegt in einem Abstand von der Mantelfläche des Domes 68, so daß zwischen Lochplatte 116 und Dom 68 ein Zwischenraum 120 gebildet wird. Auf der dem Dom 68 abgewandten Außenseite der Lochplatte 116 ist ein Blechteil 122 aufgeschweißt. Der Blechteil 122 ist so geformt, daß ein mäanderförmiger Kühlmittelkanal 124 gebildet wird. Der Kühlmittelkanal 124 steht mit den Düsenöffnungen 118 in Verbindung. Der Blechteil 122 ist auf einer Schicht 126 abgestützt, welche den Wärmeübergang von dem Mantel der Spitze 62 zu den Kühlmittelkanälen 124 des Verdampfungskühlers 110 begrenzt. Diese Schicht 126 besteht bei der Ausführung nach Fig.5 bis 7 aus einer Mehrzahl von im wesentlichen parallelen Blechen 128, 130, 132.

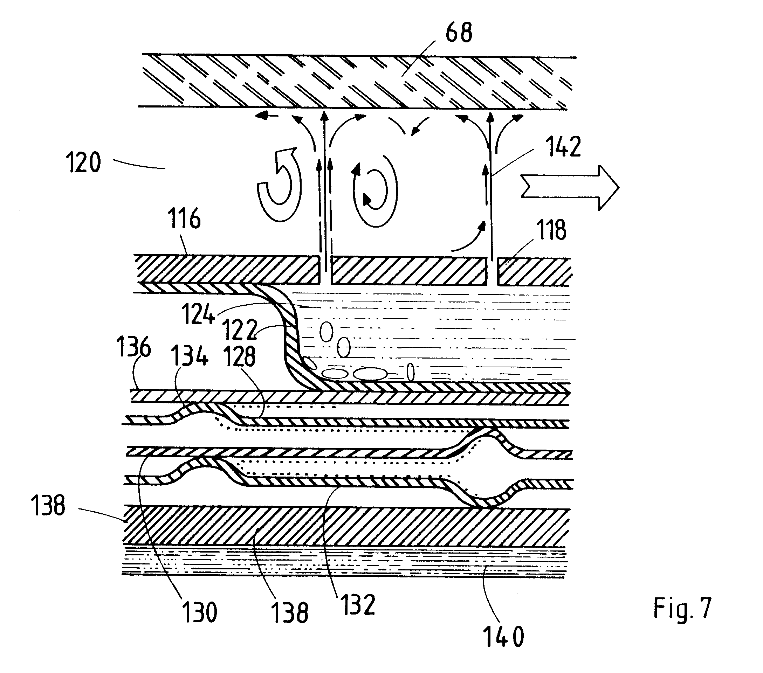

Diese Bleche 128, 130 und 132 sind mit Sicken 134 versehen und an gegeinander versetzten Stellen miteinander bzw. mit einem an den Blechteil 122 angeschweißten Blech 136 oder dem Mantel 138 der Spitze 62 verschweißt. Wie aus Fig.7 am besten ersichtlich ist, erfolgt dann der Wärmeübergang durch Leitung längs eines relativ langen, in den Blechen 132, 130, 128 und 136 verlaufenden Pfades, der in Fig.7 durch Punktierung angedeutet ist. Ein weiterer Wärmeübergang erfolgt durch Strahlung, wie in Fig.7 durch Pfeile angedeutet ist. Diese Strahlung kann dadurch reduziert werden, daß die Bleche 128 bis 136 mit einer spiegelnden Oberfläche von geringem Absorptions- und Emissionsvermögen versehen werden. Der Mantel 138 der Spitze 62 ist weiterhin auf der Außenseite mit einer Wärmeschutzschicht 140 versehen.

Durch die beschriebene Schicht 126 wird zwar der Wärmefluß von der heißen Struktur 10 zu dem Verdampfungskühler 110 begrenzt. Es wird aber ein gewisser, definierter Wärmefluß zugelassen. Das hat den Vorteil, daß die Struktur mit gekühlt und auf einer zulässigen, wenn auch hohen Temperatur gehalten wird.

Wie aus Fig.6 und 7 ersichtlich ist, tritt das Kühlmittel als Strahl 142 aus jeder der Düsen 118 aus und prallt auf die Außenseite des Domes 168. Das austretende Kühlmittel wird dabei durch die heiße Oberfläche des Domes 168 verdampft. Die Verdampfungswärme kühlt dabei die Oberfläche des Domes 68. Der gebildete Dampf des Kühlmittels strömt in dem Zwischenraum 120. Durch den Aufprall des Strahls 142 im wesentlichen senkrecht zur Oberfläche des Domes 68 und durch die querverlaufende Gasströmung tritt eine starke Verwirbelung des Kühlmittels ein. Der Wärmeübergang von dem Dom 68 auf das Kühlmittel erfolgt dadurch weitgehend gleichmäßig über die gesamte Oberfläche des Domes 68 hinweg. Es ergibt sich dabei ein guter Wärmeübergangskoeffizient. Die Verwirbelung verhindert auch die Ausbildung eines wärmeisolierenden Dampffilmes in dem Zwischenraum 120.

Der Kühlmitteldampf fließt durch den Zwischenraum 120 und tritt durch die Schlitze 85 aus, die zwischen den Rändern des Fensterausschnitts 66 und dem Dom 68 gebildet sind. Durch dieses austretende Gas wird wie bei der Grenzschichtausblasung ein schützender Gaspuffer gebildet. Dieser Gaspuffer bewirkt, daß aerodynamisch nicht vermeidbare Verwirbelungen in diesem Bereich nicht zu hohen zusätzlichen Aufheizungen führen.

Als Kühlmittel wird vorzugsweise ein Druckmittel mit hoher Verdampfungsenthalpie benutzt. Als vorteilhaft hat sich dabei Wasser oder Ammoniak $(NH_3)$ erwiesen. Diese Substanzen haben relativ hohe spezifische Verdampfungsenthalpien. Die Verdampfungstemperatur bei atmosphärischem Druck liegen günstig zu den Umgebungstemperaturen. Die Verdampfungsenthalpie ist

$$r_{s,H_2O} = 2\ 257\ kJ/kg$$

für Wasser und

$$r_{s,NH_3} = 1\ 369\ kJ/kg$$

für Ammoniak. Die Verdampfungstemperaturen sind 100°C bei Wasser und -33°C bei Ammoniak.

Die Düsen oder Löcher 118 in der Lochplatte 116 sind ungleichförmig über die Fläche der Lochplatte 116 hinweg verteilt, so daß der durch die Kühlung auftretende räumliche Temperaturgradient in dem Dom 68 minimiert wird.

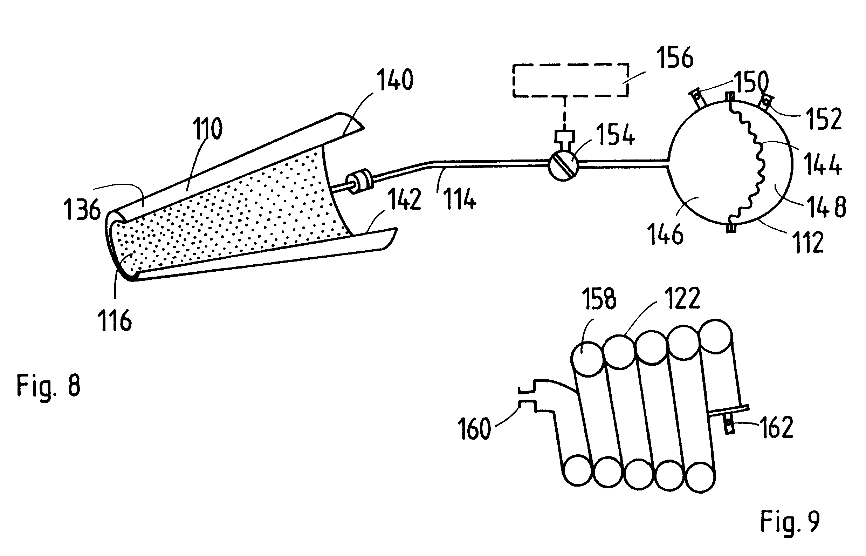

Fig.8 zeigt schematisch den Aufbau des Verdampfungskühlers 110.

Der Verdampfungskühler 110 enthält auf der Innenseite die Lochplatte 116 und auf der Außenseite das Blech 136. Lochplatte 116 und Blech 136 sind längs ihrer Längskanten 140 und 142 miteinander verbunden. Der (in Fig.8 nicht sichtbare) Kühlmittelkanal 124 ist über Leitung 114 mit dem Tank 112 verbunden. Der Tank 112 ist durch eine flexible Membran 144 in zwei Kammern 146 und 148 unterteilt. In die mit der Leitung 114 verbundene Kammer 146 ist über einen Stutzen 150 Wasser als Kühlmittel eingefüllt. In die andere Kammer 148 ist über einen Stutzen 152 ein Druckgas wie Druckluft eingefüllt. Das Druckgas steht unter hohem Druck. Unter entsprechend hohem Druck steht dann auch das Wasser. In der Leitung 114 ist ein elektromagnetisch gesteuertes Ventil 154 angeordnet. Das Ventil 154 ist durch eine Elektronik 156 gesteuert. Über das Ventil 154 wird das Wasser unter hohem Druck in den Kühlmittelkanal 124 geleitet. Dabei kann über das Ventil 154 der Druck des Wassers im Kühlmittelkanal 124 und damit die Kühlwirkung des Verdampfungskühlers 110 zeitabhängig gesteuert werden. Es kann z.B. berücksichtigt werden, daß die Erwärmung des Domes 68 in der Anfangsflugphase stärker ist als in der Endflugphase.

Fig.9 zeigt eine abgewandelte Form des Tanks 122. Der Tank 122 ist hier von einem gewendelten Rohr 158 gebildet, das an dem in Fig.9 linken Ende mit einem Anschluß 160 für die Leitung 114 versehen ist. An dem in Fig.9 rechten Ende ist Ammoniak über einen Füllstutzen 162 eingefüllt. Das Ammoniak steht dabei unter seinem Dampfdruck. Das sind etwa 10 MPa bei 25°C.

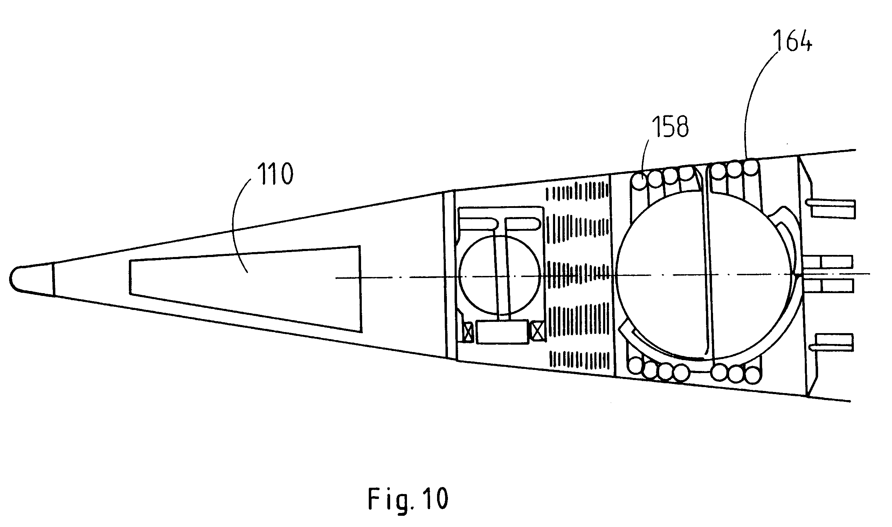

Wie aus Fig.10 ersichtlich ist, ist das gewendelte Rohr 158 innerhalb der Außenhaut 164 des Flugkörpers und an deren Form angepaßt angeordnet. Dadurch erhöht auch hier der Tank 112 die Stabilität der Struktur 60.

**Patentansprüche**

1. Lenkflugkörper, insbesondere Hochgeschwindigkeits-Lenkflugkörper mit einem Suchkopf (22) der durch eine Suchkopfabdeckung abgedeckt ist,
   **dadurch gekennzeichnet, dass**
   (a) der Suchkopf (22) von einem drehbar gelagerten und antreibbaren Dom (28) abgedeckt ist und
   (b) der Dom (28) von der Struktur (10) des Lenkflugkörpers in Umfangsrichtung bis auf einen seitlichen Fensterausschnitt (14) umgeben ist.

2. Lenkflugkörper nach Anspruch 1, **dadurch gekennzeichnet, dass** der Suchkopf (22) in einem Gehäuse (24) sitzt, das im Bereich des Fensterausschnitts (14) durch ein Fenster (26) hermetisch abgeschlossen ist.

3. Lenkflugkörper nach Anspruch 1 oder 2, **dadurch gekennzeichnet, dass** in einen zwischen Dom (28) und Struktur (10) des Lenkflugkörpers gebildeten Zwischenraum (46) ein Kühlmittel einleitbar ist.

4. Lenkflugkörper nach Anspruch 3, **dadurch gekennzeichnet, dass** der Dom (28) achssymmetrisch zu einer zu der Längsachse (34) des Lenkflugkörpers parallelen aber zu dieser seitlich versetzten Achse (32) ausgebildet und um diese Achse (32) drehbar ist, wobei zwischen der Struktur (10) des Lenkflugkörpers und dem Dom (28) der im Querschnitt etwa mondsichelförmige Zwischenraum (46) gebildet ist.

5. Lenkflugkörper nach einem der Ansprüche 1 bis 4, **dadurch gekennzeichnet, dass** der Dom (28) eine mehrseitige Pyramide bildet, welche von planparallelen Facetten gebildet ist.

6. Lenkflugkörper nach Anspruch 3, **dadurch gekennzeichnet, dass** die Struktur (10) des Lenkflugkörpers eine wärmeisolierende Schicht (50) aufweist, welche den Zwischenraum (46) gegen eine Aussenhaut (48) des Lenkflugkörpers thermisch isoliert.

7. Lenkflugkörper nach einem der Ansprüche 1 bis 6, **dadurch gekennzeichnet, dass** die Struktur (10) des Lenkflugkörpers eine Spitze (12) bildet und der Dom (28) einerseits mit seinem geschlossenen Ende in der Spitze (12) und andererseits mit seinem Rand in der Struktur (10) des Lenkflugkörpers drehbar gelagert ist.

8. Lenkflugkörper nach den Ansprüchen 3 und 6, **dadurch gekennzeichnet, dass** in der Spitze (12) Kühlmittelauslässe (52) gebildet sind, die in den Zwischenraum (46) münden.

9. Lenkflugkörper nach Anspruch 3, **dadurch gekennzeichnet, dass** zum Einleiten von Flüssigkeit in dem Zwischenraum zwischen Dom (68) und Struktur (60) ein Verdampfungskühler (110) mit einer um den Dom (68) herumgreifenden Lochplatte (116) angeordnet ist, durch deren Löcher (118) ein Kühlmittel unter Druck gegen den Dom (68) sprühbar ist.

10. Lenkflugkörper nach Anspruch 9, **dadurch gekennzeichnet, dass** zwischen Lochplatte (116) und Dom (68) ein Zwischenraum (120) gebildet ist.

11. Suchkopfabdeckung nach Anspruch 9 oder 10, **dadurch gekennzeichnet, dass das** Kühlmittel Wasser ist.

12. Suchkopfabdeckung nach Anspruch 9 oder 10, **dadurch gekennzeichnet, dass** das Kühlmittel Ammoniak ($NH_3$) ist.

13. Suchkopfabdeckung nach einem der Ansprüche 9 bis 12, **dadurch gekennzeichnet, dass** auf die dem Dom (68) abgewandte Oberfläche der Lochplatte (116) ein Blechteil (122) aufgeschweisst ist, das einen mäanderförmigen Kanal (124) für das Kühlmittel bildet, welcher mit den Löchern (118) der Lochplatte (116) in Verbindung steht.

14. Suchkopfabdeckung nach Anspruch 6, **dadurch gekennzeichnet, dass** die wärmeisolierende Schicht (126) von einer Mehrzahl von mit Ausprägungen (134) versehenen Blechen (128, 130, 132) gebildet ist, die an gegeneinander versetzten Stellen aneinander anliegen und miteinander verbunden sind.

15. Suchkopfabdeckung nach einem der Ansprüche 9 bis 14, **dadurch gekennzeichnet, dass** das flüssige Kühlmittel in einem Tank (112) angeordnet ist, der durch eine Membran (144) in zwei Kammern (146, 148) unterteilt ist, wobei die eine Kammer (146) das Kühlmittel und die andere Kammer (148) ein Druckgas enthält.

16. Suchkopfabdeckung nach einem der Ansprüche 9 bis 14, **dadurch gekennzeichnet, dass** das Kühlmittel in einem von einem gewendelten Rohr (158) gebildeten Tank angeordnet ist.

17. Suchkopfabdeckung nach einem der Ansprüche 9 bis 16, **dadurch gekennzeichnet, dass** die Lochplatte (116) und Mittel (112, 122) zum Speichern und Zuführen des Kühlmittels zu der Lochplatte (116) so in die Struktur (60) integriert sind, dass sie zur Stabilität der Struktur beitragen.

18. Suchkopfabdeckung nach Anspruch 17, **dadurch gekennzeichnet, dass** ein Tank (112) für das Kühlmittel torisch ausgebildet ist und sich koaxial zur Längsachse (78) des Flugkörpers innerhalb des Aussenmantels des Flugkörpers erstreckt.

19. Suchkopfabdeckung nach einem der Ansprüche 9 bis 18, **dadurch gekennzeichnet, dass** der Verdampfungskühler (110) in gedrosseltem Wärmeaustausch mit dem den Suchkopf (86) umgebenden Flugkörpermantel (138) ist, derart, dass auch der Flugkörpermantel (138) im Bereich des Suchkopfes (86) auf eine zulässige Temperatur gekühlt wird.

20. Suchkopfabdeckung nach einem der Ansprüche 9 bis 19, **dadurch gekennzeichnet, dass** die Verteilung und/oder die Abmessungen der Löcher (118) in der Lochplatte (116) über die Fläche der Lochplatte (116) hinweg derart ungleichmässig sind, dass der Temperaturgradient in dem Material des Domes (68) im wesentlichen minimiert ist.

21. Suchkopfabdeckung nach einem der Ansprüche 9 bis 20, **dadurch gekennzeichnet, dass** das verdampfte Kühlmittel aus dem Zwischenraum (120) durch Längsschlitze (85) zwischen Dom (68) und Struktur (60) am Rand des Fensterausschnitts (66) austritt.

## Claims

1. Guided missile, particularly high-velocity guided missile, including a seeker head (22) covered by a seeker head dome,
   **characterized in that**
   (a) the seeker head (22) is covered by a dome (28) which is rotatably supported and drivable for rotation, and
   (b) the dome (28) is circumferentially surrounded by the guided missile structure (10) with the exception of a lateral window section (14).

2. Guided missile according to claim 1, **characterized in that** the seeker head (22) is placed in a housing (24) which is hermetically closed in the region of the window section (14) by means of a window (26).

3. Guided missile according to claim 1 or 2, **characterized in that** a coolant is adapted to be passed into an intermediate space (46) formed between the dome (28) and the structure (10).

4. Guided missile according to claim 3, **characterized in that** the dome (28) is axially symmetrically formed with respect to an axis (32) which is parallel with respect to the lengthwise axis (34) of the guided missile but laterally offset from said lengthwise axis, and rotatable about said axis (32), the intermediate space (46) between the structure (10) of the guided missile and the dome (28) being approximately crescent-shaped in cross-section.

5. Guided missile according to any one of claims 1 to 4, **characterized in that** the dome (28) defines a polyhedral pyramid formed by planeparallel facets.

6. Guided missile according to claim 3, **characterized in that** the structure (10) of the guided missile comprises a heat-insulating layer (50) which thermally insulates the intermediate space (46) from an outer skin (48) of the guided missile.

7. Guided missile according to any one of claims 1 to 6, **characterized in that** the structure (10) of the guided missile defines a tip (12), the dome (28) having, on the one hand, a closed end which is rotatably supported in the tip (12), and, on the other hand, a rim which is rotatbly supported in the structure (10) of the guided missile.

8. Guided missile according to claims 3 and 6, **characterized in that** coolant outlets (52) are formed in the tip (12) and open into the intermediate space (46).

9. Guided missile according to claim 3, **characterized in that** an evaporation cooler (110) including a perforated plate (116) which extends around the dome (68), is arranged for passing liquid into the intermediate space between the dome (68) and the structure (60), a coolant being adapted to be sprayed under pressure toward the dome (68) through the holes (118) of the perforated plate (116).

10. Guided missile according to claim 9, **characterized in that** an intermediate space (120) is formed between the perforated plate (116) and the dome (68).

11. Seeker head dome according to claim 9 or 10, **characterized in that** the coolant is water.

12. Seeker head dome according to claim 9 or 10, **characterized in that** the coolant is ammonia ($NH_3$).

13. Seeker head dome according to any one of claims 9 to 12, **characterized in that** a sheet metal element (122) is welded to a surface of the perforated plate (116) which surface is remote from the dome (68), the sheet metal element (122) defining a meander-shaped passage (124) for the coolant which passage (124) communicates with the holes (118) of the perforated plate (116).

14. Seeker head dome according to claim 6, **characterized in that** the heat insulating layer (126) is formed by a plurality of metal sheets (128,130,132) provided with embossings (134), the metal sheets (128,130,132) engaging each other and being connected to each other at mutually offset locations.

15. Seeker head dome according to any one of claims 9 to 14, **characterized in that** the liquid coolant is disposed in a tank (112) subdivided by means of a membrane (144) into two chambers (146,148), one of the chambers (146) containing the coolant and an other one of the chambers (148) containing pressurized gas.

16. Seeker head dome according to any one of claims 9 to 14, **characterized in that** the coolant is disposed in a tank formed by a coiled tube (158).

17. Seeker head dome according to any one of claims 9 to 16, **characterized in that** the perforated plate (116) and means (112,122) for storing the coolant and supplying the same to the perforated plate (116) are integrated with the structure (60) in a manner such as to contribute to the stability of the structure.

18. Seeker head dome according to claim 17, **characterized in that** a tank (112) for the coolant is of a toroidal construction and extends coaxially with the lengthwise axis (78) of the missile within the outer shell of the missile.

19. Seeker head dome according to any one of claim 9 to 18, **characterized in that** the evaporation cooler (110) is in restricted heat exchange with the missile shell (138) which surrounds the seeker head (86), in a manner such that the missile shell (138) is cooled to a permissible temperature in the area of the seeker head (86).

20. Seeker head dome according to any one of claims 9 to 19, **characterized in that** the distribution and/or the size of the holes (118) in the perforated plate (116) across the surface of the perforated plate (116) are non-uniform such that the temperature gradient in the material of the dome (68) is substantially minimized.

21. Seeker head dome according to any one of claims 9 to 20, **characterized in that** the evaporated coolant exits from the intermediate space (120) through longitudinal slots (85) provided between the dome (68) and the structure (60) at the rim of the window section (66).

**Revendications**

1. Missile téléguidé, en particulier un missile téléguidé à haute vitesse muni d'une tête chercheuse (22) couverte par une couverture de tête chercheuse,
        **caractérisé par le fait que**
        (a) la tête chercheuse (22) est couverte par un dôme (28) monté de sorte à être rotatif et commandable, et
        (b) le dôme (28) est entouré par la structure (10) du missile téléguidé dans la direction circonférentielle à part d'une découpure latérale de fenêtre (14).

2. Missile téléguidé selon la revendication 1, **caractérisé par le fait que** la tête chercheuse (22) est disposée dans un boîtier (24) fermé hermétiquement dans le domaine de la découpure de fenêtre (14) par une fenêtre (26).

3. Missile téléguidé selon la revendication 1 ou 2, **caractérisé par le fait qu'**un agent réfrigérant peut être introduit dans un espace intermédiaire formé entre le dôme (28) et la structure (10) du missile téléguidé.

4. Missile téléguidé selon la revendication 3, **caractérisé par le fait que** le dôme (28) est symétrique par rapport à un axe (32) parallèle à l'axe longitudinal (34) du missile téléguidé mais latéralement décalé par rapport à celui-ci, et il est rotatif autour de cet axe (32), l'espace intermédiaire (46) ayant en coupe transversale une forme approximativement lunulaire, étant formé entre la structure (10) du missile téléguidé et le dôme (28).

5. Missile téléguidé selon l'une des revendications 1 à 4, **caractérisé par le fait que** le dôme (28) forme une pyramide à plusieurs côtés formés par des facettes à faces planes et parallèles.

6. Missile téléguidé selon la revendication 3, **caractérisé par le fait que** la structure (10) du missile téléguidé a une couche (50) calorifuge isolant thermiquement l'espace intermédiaire (46) contre un bordage extérieur (48) du missile téléguidé.

7. Missile téléguidé selon l'une des revendications 1 à 6, **caractérisé par le fait que** la structure (10) du missile téléguidé forme une pointe (12) et le dôme (28) est monté rotativement d'un côté avec son extrémité fermée dans la pointe (12), et de l'autre côté avec son bord dans la structure (10) du missile téléguidé.

8. Missile téléguidé selon les revendications 3 et 6, **caractérisé par le fait que** des sorties d'agent réfrigérant (52) sont formées dans la pointe (12) et débouchent dans l'espace intermédiaire (46).

9. Missile téléguidé selon la revendication 3, **caractérisé par le fait qu'**afin d'introduire du liquide, un réfrigérant par évaporisation (110) muni d'une plaque à trous (116) s'étendant autour du dôme (68), est disposé dans l'espace intermédiaire entre le dôme (68) et la structure (60), un agent réfrigérant pouvant être jailli sous pression par les trous (118) de la plaque à trous contre le dôme (68).

10. Missile téléguidé selon la revendication 9, **caractérisé par le fait qu'**un espace intermédiaire (120) est formé entre la plaque à trous (116) et le dôme (68).

11. Couverture de tête chercheuse selon la revendication 9 ou 10, **caractérisée par le fait que** l'agent réfrigérant est de l'eau.

12. Couverture de tête chercheuse selon la revendication 9 ou 10, **caractérisée par le fait que** l'agent réfrigérant est de l'ammoniac ($NH_3$).

13. Couverture de tête chercheuse selon l'une des revendications 9 à 12, **caractérisée par le fait qu'**un élément en tôle (122) est soudé sur la surface de la plaque à trous (116) opposée au dôme (68), élément en tôle qui forme un canal en forme de méandre (124) pour l'agent réfrigérant en connexion avec les trous (118).

14. Couverture de tête chercheuse selon la revendication 6, **caractérisée par le fait que** la couche calorifuge (126) est formée par une pluralité de tôles (128,130,132) munis d'estampages (134) qui, à des endroits décalés, sont en contact et reliés l'un à l'autre.

15. Couverture de tête chercheuse selon l'une des revendications 9 à 14, **caractérisée par le fait que** l'agent réfrigérant liquide est disposé dans un réservoir (112) divisé par un diaphragme (144) en deux chambres (146,148), l'une des chambres (146) comprenant l'agent réfrigérant et l'autre chambre (148) un gas sous pression.

16. Couverture de tête chercheuse selon l'une des revendications 9 à 14, **caractérisée par le fait que** l'agent réfrigérant est disposé dans un réservoir formé par un tuyau hélicoidal (158).

17. Couverture de tête chercheuse selon l'une des revendications 9 à 16, **caractérisée par le fait que** la plaque à trous (116) et des moyens (112,122) destinés à accumuler et à amener l'agent réfrigérant à la plaque à trous (116) sont intégrés dans la structure (60) de sorte qu'ils contribuent à la stabilité de la structure.

18. Couverture de tête chercheuse selon la revendication 17, **caractérisée par le fait qu'**un réservoir (112) pour l'agent réfrigérant est torique et s'étend coaxialement à l'axe longitudinal du missile à l'intérieur de la chemise extérieure du missile.

19. Couverture de tête chercheuse selon l'une des revendications 9 à 18, **caractérisée par le fait que** le réfrigérant par évaporisation (110) est en échange de chaleur étranglé avec la chemise de missile (138) entourant la tête chercheuse (86) de sorte qu'également la chemise de missile (138) dans le domaine de la tête chercheuse (86) est refroidie à une température admise.

20. Couverture de tête chercheuse selon l'une des revendication 9 à 19, **caractérisée par le fait que** la répartition et/ou la dimension des trous (118) dans la plaque à trous (116) sur la surface de la plaque à trous (116) sont tellement irrégulières que le gradient de température dans la matière du dôme (68) est essentiellement minimisé.

21. Couverture de tête chercheuse selon l'une des revendications 9 à 20, **caractérisée par le fait que** l'agent réfrigérant évaporisé sort de l'espace intermédiaire (120) par les fentes longitudinales (85) entre le dôme (68) et la structure (60) au bord de la découpure de fenêtre (66).

Fig. 1

Fig. 2

EP 0 509 394 B1

Fig. 4

Fig. 3

13

Fig. 5

EP 0 509 394 B1

14

Fig.6

GASQUERSTRÖMUNG

Fig.7

Fig. 7

EP 0 509 394 B1

Fig. 8

Fig. 9

EP 0 509 394 B1

Fig. 10

Fig.13

Fig.12

Fig.11